# EUROPEAN PATENT SPECIFICATION

(11) **EP 4 186 624 B1**
(45) Date of publication and mention of the grant of the patent: **31.07.2024**
(21) Application number: 22202654.4
(22) Date of filing: 20.10.2022
(51) Int. Cl.: B23D 45/06, B23D 47/12, B23D 59/00, B27B 5/22, B23Q 11/00, B23Q 11/06, B23Q 15/22, B23Q 17/24

(54) **TABLE TOOL**
TISCHWERKZEUG
TABLE-OUTIL

(30) Priority: 30.11.2021 CN 202111438115; 05.09.2022 CN 202211077516
(43) Date of publication of application: 31.05.2023
(73) Proprietor: Nanjing Chervon Industry Co., Ltd., Nanjing, Jiangsu 211106 (CN)
(72) Inventor: WANG, Shisheng, Nanjing, Jiangsu (CN); LI, Shuang, Nanjing, Jiangsu (CN); WANG, Huaishu, Nanjing, Jiangsu (CN); LV, Fangya, Nanjing, Jiangsu (CN); ZHENG, Shutao, Nanjing, Jiangsu (CN); WU, Fan, Nanjing, Jiangsu (CN)
(74) Representative: Sun, Yiming

(56) References cited:
- EP-A2- 2 168 736
- US-A1- 2004 159 198
- US-A1- 2014 130 643
- US-A1- 2014 318 342
- US-A1- 2017 225 351

## Description

### TECHNICAL FIELD

The present application relates to a power tool and, in particular, to a control method for a table tool.

### BACKGROUND

US 2014/0318342 A1 discloses a table tool according to the preamble of claim 1, in particular a system for automatically adjusting a height of a cutting blade in relation to a height of a workpiece, a system for providing fine adjustment of a height of bevel angle of a saw blade or work surface, and a system for automatic speed control and shut-off for a saw blade.

Currently, table tools and some large power tools are the most widely used tools. The table tools are often used for cutting and grinding operations. Cutting is used as an example. A table tool generally includes a table and a saw blade disposed on the table and used for cutting materials including wood, plastic, metal, and the like. When a user cuts some small workpieces, generally, the user can operate a switch on the table with one hand to turn off an electric motor after the cutting is completed. However, in some specific cases, for example, when a relatively large workpiece needs to be machined, after the user finishes cutting, the user cannot free his hands from cutting. Thus, the table tool cannot be shut down in time, resulting in the waste of power and potential safety hazards. Therefore, the user experience is poor.

### SUMMARY

According to the invention, there is provided a table as defined by claim 1, which provides table tool that has multiple working modes and can be shut off after automatically identifying the removal of a workpiece.

Further preferred embodiments are defined in the dependent claims.

The present application has the following beneficial effects: the user can independently set different working modes through a switch disposed on the table according to different cutting requirements, thereby satisfying different requirements of the user when large and small workpieces are cut. On this basis, a function of an automatic shutdown after the removal of the workpiece is intelligently identified is provided so that while the service life of a battery pack is improved, potential safety hazards are reduced and the user experience is improved.

### BRIEF DESCRIPTION OF DRAWINGS

FIG. 1 is a perspective view of a table tool as a specific example;
FIG. 2 is an electric control principle diagram of the table tool in FIG. 1;
FIG. 3A is a schematic view illustrating a position of a sensing device on the table tool in FIG. 1;
FIG. 3B is a schematic view illustrating another position of a sensing device on the table tool in FIG. 1;
FIG. 4 is a flowchart of a control method for the table tool in FIG. 1 in an intelligent mode;
FIG. 5 is a flowchart of a control method for the table tool in FIG. 1 in a normal mode;
FIG. 6 is a perspective view of a table tool as another specific example;
FIG. 7 is a schematic view illustrating a position of a sensing device on the table tool in FIG. 6;
FIG. 8 is an electric control principle diagram of a table tool as another example;
FIG. 9 is a control circuit diagram of a second switch of the table tool in FIG. 6;
FIG. 10 is a flowchart of a control solution for the table tool in FIG. 6 in an intelligent mode and a normal mode;
FIG. 11 is a schematic view illustrating states of a workpiece when the table tool in FIG. 6 is in a load-free stage, an on-load stage and an unloading stage; and
FIG. 12 is a flowchart of a control solution for the table tool in FIG. 6 in an intelligent mode.

### DETAILED DESCRIPTION

The present application is described below in detail in conjunction with drawings and specific examples.

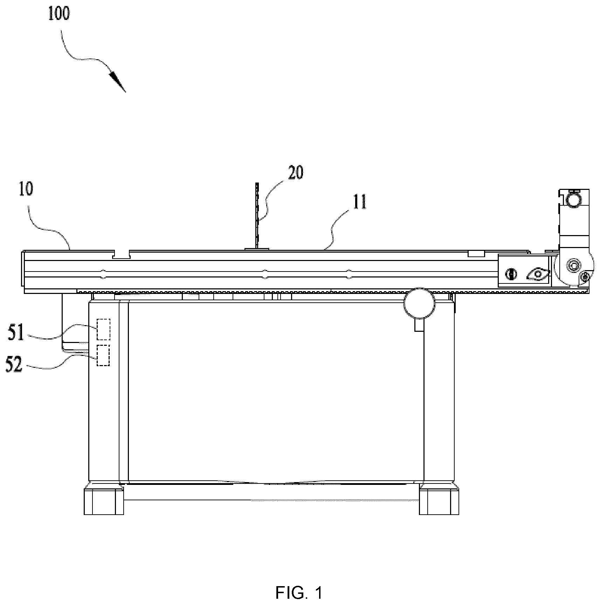

FIG. 1 shows a table tool 100 as an example in the present application. The table tool 100 may be of any of known types, such as a freestanding table tool or a portable table tool. The table tool 100 in FIG. 1 is designed to be movable.

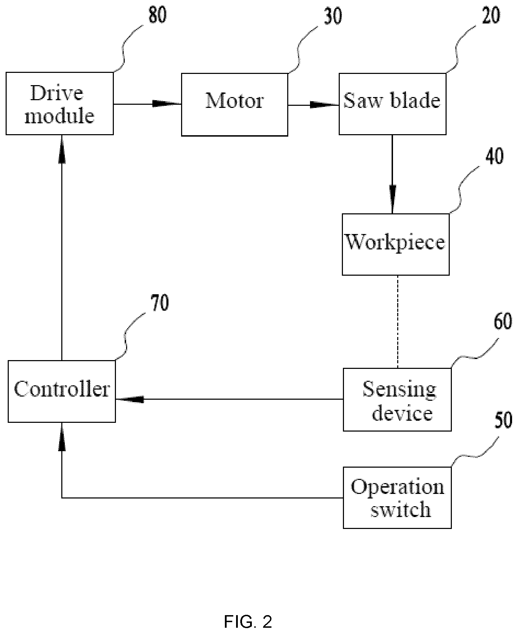

Referring to FIGS. 1 to 4, the table tool 100 includes a table 10 with a workplane 11 on which a workpiece can be placed. Specifically, the workplane 11 is an upper surface of the table 10 and for a user to perform a cutting operation on. A through hole 12 is formed on the workplane 11. The table tool 100 further includes a saw blade 20 for cutting the workpiece. The saw blade 20 penetrates through the through hole 12 and extends. The table tool 100 further includes a motor 30 for supplying power, and the saw blade 20 is driven by the motor 30 disposed below the workplane 11 to rotate to implement a cutting function. The saw blade 20 is used for cutting the workpiece 40 pushed along the workplane 11 and in contact with the saw blade 20, such as wood.

The table tool 100 further includes a drive module 80 for driving the motor 30 and a controller 70 electrically connected to the drive module 80. The controller 70 outputs a control signal to a driver module 80 to control the operation of the motor 30. Specifically, the drive module 80 distributes a voltage to the motor 30 based on a certain logical relationship when driven by the control signal outputted by the controller 70 so that the motor 30 starts and generates continuous torque. In some examples, the drive module 80 includes multiple electronic switches. Specifically, the electronic switches include field-effect transistors, insulated-gate bipolar transistors or the like. In some examples, the drive module 80 is a three-phase bridge circuit. The motor 30 in this example is preferably configured to be a brushless electric motor. Of course, the motor 30 may be another form of electric motor, which is not limited in the present application. In some examples, the controller 70 may be a dedicated control chip (such as a microcontroller unit (MCU)).

In some examples, the table tool 100 further includes a sensing device 60. The sensing device 60 is electrically connected to the controller 70 and used for sensing a state of the workpiece and outputting a first signal to the controller 70. Specifically, the sensing device 60 includes at least a sensor for identifying the state of the workpiece 40. Specifically, the sensing device 60 may be a mechanical switch, a signal switch, a capacitive sensor, a photoelectric switch or the like. In this example, the sensing device 60 is configured to be a capacitive proximity switch.

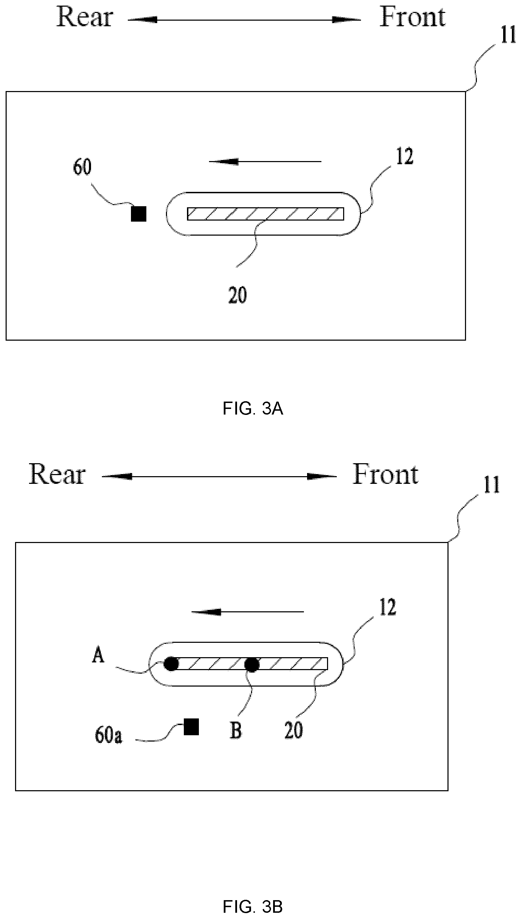

Referring to FIG. 3A, the sensing device 60 is at least partially disposed on the workplane 11 and used for sensing a machined state of the workpiece 40 to acquire an unloading signal of the workpiece 40. The saw blade 20 forms a cutting plane (not shown), and a projection of the sensing device 60 on a plane where the cutting plane is located does not overlap with a projection of the saw blade 20 on the plane where the cutting plane is located. A direction of an arrow in FIG. 3A is a moving direction of the workpiece 40. The user moves the workpiece 40 along the direction of the arrow to perform the cutting operation. When the cutting operation is completed or the user moves the workpiece 40 out of the workplane 11, the sensing device 60 can sense the removal of the workpiece 40. The unloading signal in this example is related to the first signal outputted by the sensing device 60. The unloading signal in this example may be understood as that the workpiece finishes being machined and may also be understood as that the workpiece removes off the workplane. Of course, those skilled in the art can make other definitions for the unloading signal, such as stopping the workpiece for a period of time.

When the user operates the workpiece 40 and gradually moves the workpiece 40 towards the capacitive proximity switch along the direction of the arrow in FIG. 3A, a capacitive dielectric constant of the capacitive proximity switch changes accordingly. Due to the change of the dielectric constant, the capacitance of the capacitive proximity switch changes accordingly. The controller 70 is electrically connected to the capacitive proximity switch and acquires an electrical signal related to the capacitance of the capacitive proximity switch. After the user completes the cutting operation, the user no longer moves the workpiece 40 along the direction of the arrow in FIG. 3A.

When the user removes the workpiece 40 off the workplane 11, the capacitive dielectric constant of the capacitive proximity switch roughly returns to an original state and the sensing device 60 outputs the first signal at this time. After receiving the first signal, the controller 70 adjusts a rotational speed of the motor 30 to be a first rotational speed. Specifically, the first rotational speed in this example is 0. Of course, the first rotational speed may be set to be a relatively low rotational speed.

Referring to FIG. 3B, a sensing device 60a is at least partially disposed on the workplane 11 and used for sensing the machined state of the workpiece 40 to acquire the unloading signal of the workpiece 40. The saw blade 20 forms the cutting plane (not shown), and a projection of the sensing device 60a on the plane where the cutting plane is located is located within the projection of the saw blade 20 on the plane where the cutting plane is located. Specifically, a projection of the sensing device 60a on the workplane 11 is located between point A and point B in a front and rear direction. The point A is a rear end point of a projection of the saw blade 20 on the workplane 11, and the point B is a midpoint of the projection of the saw blade 20 on the workplane 11. A direction of an arrow in FIG. 3B is the moving direction of the workpiece 40. The user moves the workpiece 40 along the direction of the arrow to perform the cutting operation. After the cutting operation is completed, when the user moves the workpiece 40 out of the workplane 11, the sensing device 60a also can sense the unloading signal of the workpiece 40. Of course, in some examples, the user can determine the unloading signal of the workpiece by acquiring a parameter of the motor, such as a current, a voltage or the rotational speed.

In some examples, the table tool 100 further includes an operation switch 50 disposed on the table 10 and operable by the user. Specifically, the operation switch 50 includes a first switch 51 and a second switch 52. The first switch 51 is a main control switch of the table tool 100, and the second switch 52 is a motor switch of the table tool 100. The user can make the table tool 100 in different working modes by operating the first switch 51. Specifically, when the user operates the first switch 51 to be in a "1" gear, the table tool 100 is in a first working mode, that is, an intelligent mode. When the user operates the first switch to be in a "2" gear, the table tool 100 is in a second working mode, that is, a normal mode. When the user operates the first switch 51 to be in a "0" gear, the table tool 100 is in a shutdown mode. Of course, the preceding setting of the number of working modes and the specific correspondence are not intended to limit the present application.

Next, control methods for the table tool 100 in different working modes are described in detail below.

When the user operates the first switch 51 to be in the "1" gear, the table tool 100 is in the intelligent mode. At this time, the motor 30 does not work, and of course, the saw blade 20 does not rotate. When the user turns on the second switch 52, the motor 30 starts to drive the saw blade 20 to rotate so that the user performs the cutting operation. The controller 70 senses the workpiece 40 through the sensing device 60. After the sensing device 60 senses that the user finishes cutting the workpiece 40, the controller 70 controls the motor 30 to be turned off to stop the saw blade 20 from continuing rotating. When the table tool 100 is still in the intelligent mode and the user needs to start the motor 30 again to perform the cutting operation, the user needs to turn on the second switch 51 again to control the motor 30 to start. Of course, it is to be noted that when the table tool 100 is in the intelligent mode, the user may control the first switch 51 to be in the "0" gear to achieve shutdown.

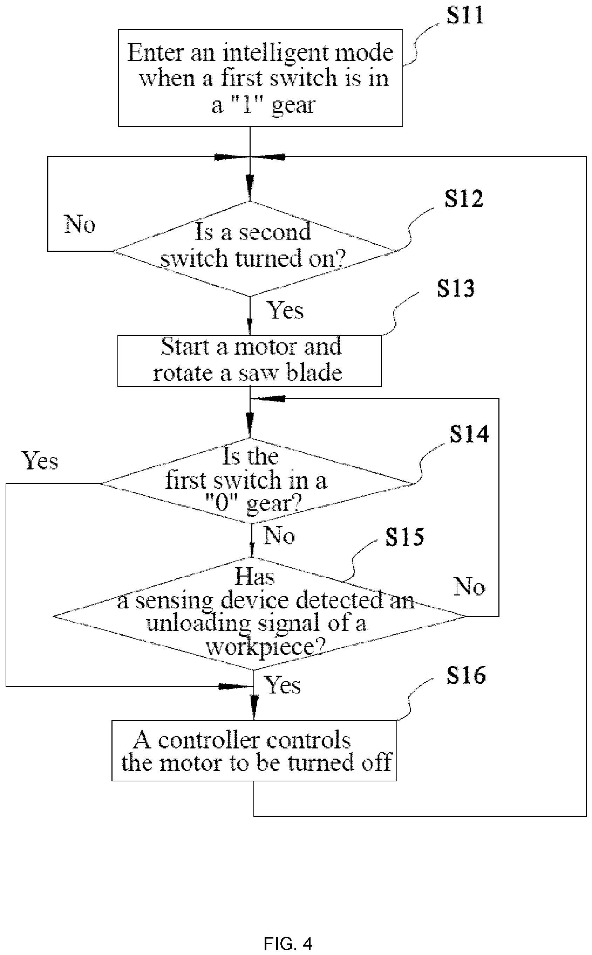

A flow of a control method for the table tool 100 in the intelligent mode is described below in conjunction with FIG. 4. The method includes the steps described below.

In S11, the controller acquires a signal that the first switch is in the "1" gear and controls the table tool to enter the intelligent mode.

In S12, whether the second switch is turned on is determined. If so, step S13 is performed. If not, step S12 is repeated.

In S13, the controller controls the motor to start and the saw blade rotates so that the user performs the cutting operation.

In S14, whether the first switch is in the "0" gear is determined. If so, step S16 is performed. If not, step S15 is performed.

In S15, whether the sensing device detects the unloading signal of the workpiece is determined. If so, step S16 is performed. If not, step S14 is performed.

In S16, the controller controls the motor to be turned off.

After the user sets the table tool to be in the intelligent mode through the first switch, the user needs to turn on the second switch so that the motor can start to drive the saw blade to rotate to satisfy cutting requirements of the user. After the user finishes cutting and the sensing device mounted on the table detects the unloading signal of the workpiece, the controller controls the motor to be turned off. When the user needs to perform the cutting operation again, the second switch needs to be turned on again. Of course, when the table tool is in the intelligent mode, the user may turn off the motor through the first switch by simply setting the first switch to be in the "0" gear.

In other examples, after the user sets the table tool to be in the intelligent mode through the first switch, the user needs to turn on the second switch so that the motor can start to drive the saw blade to rotate to satisfy the cutting requirements of the user. The difference from the preceding example is that after the user finishes cutting and the sensing device mounted on the table detects the unloading signal of the workpiece, the controller controls the motor to be turned off in a preset time. Of course, the preset time may be designed by those skilled in the art according to actual situations. In this example, the preset time is configured to be less than or equal to 1 second. When the user needs to perform the cutting operation again, the second switch needs to be turned on again. Of course, when the table tool is in the intelligent mode, the user may turn off the motor through the first switch by simply setting the first switch to be in the "0" gear.

When the user operates the first switch 51 to be in the "2" gear, the table tool 100 is in the normal mode. At this time, the motor 30 normally starts to drive the saw blade 20 to rotate, and the user may directly perform the cutting operation. It is to be noted that when the first switch 51 is in the "2" gear, the second switch 52 is in an "inactive state". The preceding "inactive state" may be understood as that the controller 70 does not perform corresponding processing on turn-on and turn-off signals of the second switch 52 and an output signal of the sensing device 60. After the user finishes cutting, the motor 30 works normally and the saw blade 20 rotates normally. At this time, the user may choose to continue the cutting operation or operate the first switch 51 to be in the "0" gear to turn off the motor 30.

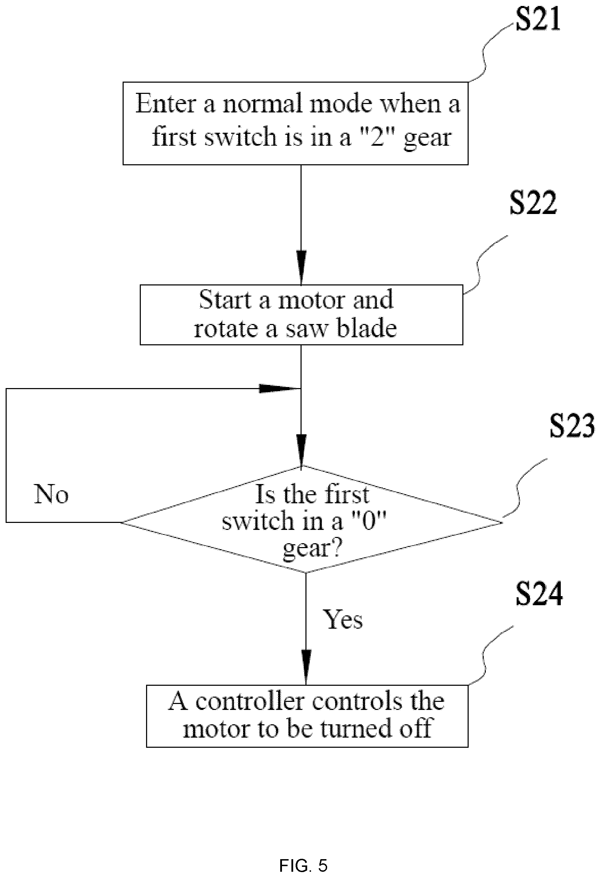

A flow of a control method for the table tool 100 in the normal mode is described below in conjunction with FIG. 5. The method includes the steps described below.

In S21, the controller acquires a signal that the first switch is in the "2" gear and controls the table tool to enter the normal mode.

In S22, the controller controls the motor to start and the saw blade rotates so that the user performs the cutting operation.

In S23, whether the first switch is in the "0" gear is determined. If so, step S24 is performed. If not, step S23 is repeated.

In S24, the controller controls the motor to be turned off.

The table tool in the present application is provided with two working modes, that is, the normal mode and the intelligent mode. It is to be understood that the operation in the normal mode is relatively simple. The first switch is set to be in the "2" gear so that the motor can start and the cutting operation is performed. After the cutting is completed, the first switch is set to be in the "0" gear so that the motor is turned off. This mode is suitable for the user to cut a small workpiece. After the operation, the first switch can be easily operated by two hands. Moreover, this mode is suitable for the cutting operation to be continuously performed within a short period of time. In the intelligent mode of the present application, when the first switch is in the "1" gear, the user needs to trigger the second switch so that the motor can start and the cutting operation is performed. The beneficial effect is that in the intelligent mode, the controller implements a shutdown in the preset time after the sensing device senses the unloading signal of the workpiece or the controller implements the shutdown immediately. This mode is suitable for a working condition in which it is inconvenient for the user to manually shut down the machine after a large workpiece is cut.

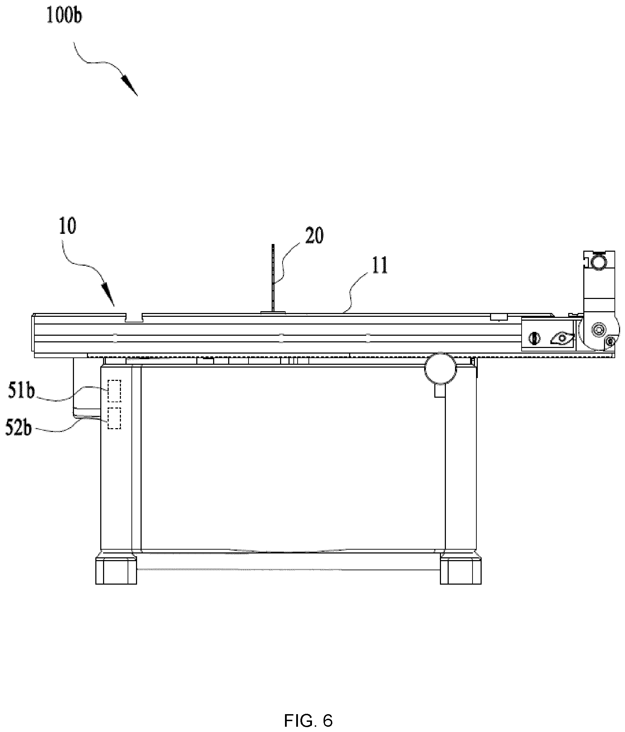

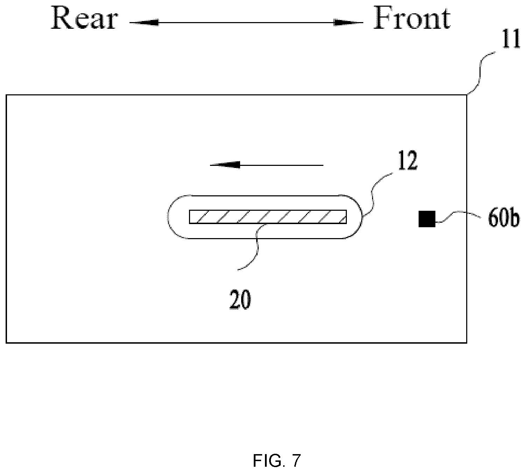

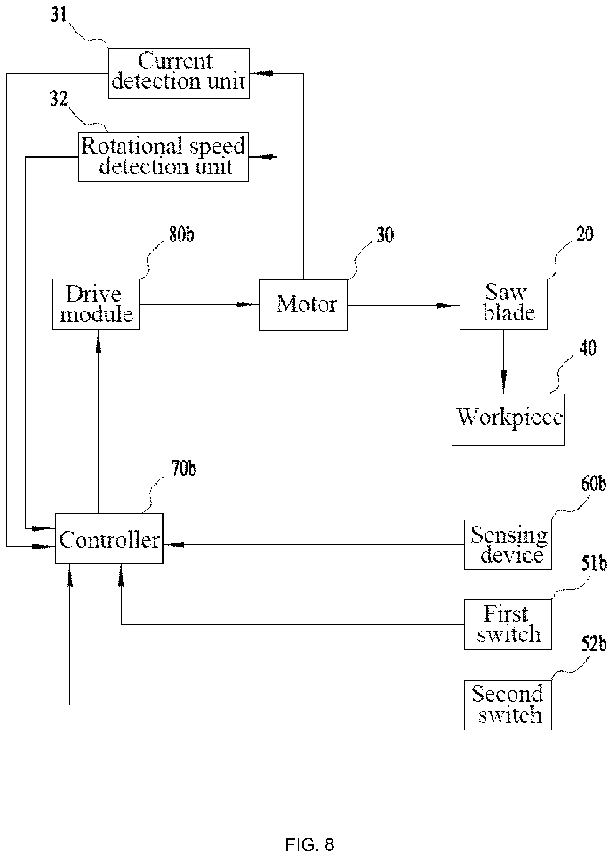

FIGS. 6 to 8 show a table tool 100b as another example in the present application. The table tool 100b may be of any of known types, such as a freestanding table tool or a portable table tool. The table tool 100b in FIG. 6 is designed to be movable.

In this example, the table tool 100b includes a drive module 80b electrically connected to a motor 30, a controller 70b, a sensing device 60b, a current detection unit 31 for acquiring a current of the motor, and a rotational speed detection unit 32 for acquiring a rotational speed of the motor. The current detection unit 31 and the rotational speed detection unit 32 are electrically connected to the controller 70b.

In some examples, the sensing device 60b is mounted on a front side of a saw blade. The sensing device 60b is electrically connected to the controller 70b and used for sensing a state of a workpiece and outputting a first signal to the controller 70b. Specifically, a distance between the sensing device 60b and the saw blade is greater than 0 and less than or equal to 20 mm. The sensing device 60b includes at least a sensor, and the sensor outputs the first signal for indicating the state of the workpiece. The state of the workpiece includes that the workpiece moves towards the saw blade or away from the saw blade. Specifically, the sensor is configured to be a capacitive proximity switch of a direct current type, an NPN type or an NO type. In other examples, the first signal outputted by the sensor is used for indicating the state of the workpiece, and the state of the workpiece includes that the workpiece 40 is located above the sensor and that the workpiece 40 is not located above the sensor. It is to be noted that the type of the sensor is not limited in the present application. For example, the sensor may be an inductive proximity switch or a photoelectric switch.

The table tool 100b in this example further includes a first switch 51b and a second switch 52b for a user to operate. The user can control a working state of the table tool 100b through the first switch 51b and the second switch 52b. Specifically, as shown in FIG. 6, the first switch 51b and the second switch 52b are disposed on a side surface of the table 10. In this manner, the user can operate the switches more conveniently, and the following can be avoided: the workpiece touches the switches by mistake, affecting machining.

Specifically, the first switch 51b is a mode switch of the table tool 100b, and the user can make the table tool 100b in different working modes by operating the first switch 51b. When the user operates the first switch 51b to be in a "1" gear, the table tool 100b is in a first working mode, that is, an intelligent mode. When the user operates the first switch to be in a "2" gear, the table tool 100b is in a second working mode, that is, a normal mode.

The second switch 52b includes an activation switch 521b and a shutoff switch 522b. When the first switch 51b is in the "1" gear, the table tool 100b is in the intelligent mode. When the first switch 51b is in the "2" gear, the table tool 100b is in the normal mode.

Specifically, when the first switch 51b is in the "2" gear, the table tool 100b is in the normal mode, and the user can control the start and stop of the table tool 100b by operating the second switch 52b. The activation switch 521b is used for controlling the motor 30 to start, and the shutoff switch 522b is used for controlling the motor 30 to be turned off. The user triggers the activation switch 521b, and the controller 70b controls the motor 30 to be powered on so as to drive the saw blade to rotate, thereby implementing a cutting function of the table tool. When the user ends a cutting operation, the shutoff switch 522b is triggered, and the controller 70b controls the motor 30 to be turned off. When the user wants to start the table tool 100b again for cutting, the activation switch 521b needs to be triggered again.

When the first switch 51b is in the "1" gear, the table tool 100b is in the intelligent mode, the user triggers the activation switch 521b, and the controller 70b controls the motor 30 to be powered on so as to drive the saw blade to rotate, thereby implementing the cutting function of the table tool. The difference from the normal mode is that when the table tool 100b works in the intelligent mode, the user can control a motor 30b to stop driving the saw blade without manually operating and triggering the shutoff switch 522b. The turn-off of the table tool 100b is determined by the table tool 100b itself rather than performed by the shutoff switch 522b. The preceding determination method is described in detail below. When the user wants to start the table tool 100b again for cutting, the activation switch 521b needs to be triggered again.

The table tool in the present application has multiple working modes and has a function of an automatic shutdown in the intelligent mode. In this manner, multiple working modes are set to satisfy different working requirements of the user. The intelligent mode is set so that power in a power supply device is saved and a battery life is improved without a manual operation of the user.

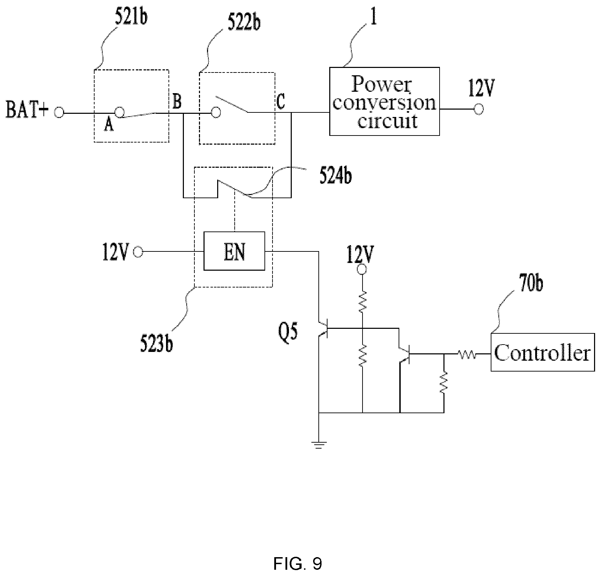

Next, a circuit principle of the second switch 52b is described in conjunction with FIG. 9. In some examples, the second switch 52b is configured to be an electromagnetic switch composed of the activation switch 521b, the shutoff switch 522b and a relay 523b. The activation switch 521b is configured to be a normally-on microswitch, and the shutoff switch 522b is configured to be a normally-off microswitch.

When the user presses the activation switch 521b, since the shutoff switch 522b is the normally-off microswitch, BAT+ generates a voltage of 12 V through the activation switch 521b, the shutoff switch 522b and a power conversion circuit 1, thereby triggering a switch tube Q5 to be turned on. An enable terminal of the relay 523b is powered on to trigger a main switch 524b of the relay 523b to be turned on so that it is always on from terminal A to terminal C and the power conversion circuit 1 continues the output of the voltage of 12 V. The preceding process may be understood as that the second switch 52b is turned on, that is, the electromagnetic switch is turned on. When acquiring that the second switch 52b is in an on state, the controller 70b outputs a control signal to a driver circuit to drive the motor 30 to rotate.

When the first switch 51b is in the "2" gear, the table tool 100b is in the normal mode, and the user needs to trigger the shutoff switch 522b, thereby implementing a shutdown function. Specifically, with continued reference to FIG. 9, when the shutoff switch 522b is pressed, the circuit from terminal A to terminal C is cut off, the +12 V loop power supply is cut off, the switch tube Q5 is turned off, and the enable terminal of the relay 523b is powered off so that BC is turned off and AC is always in an off state. The preceding process may be understood as that the second switch 52b is turned off, that is, the electromagnetic switch is turned off. When acquiring that the second switch 52b is in the off state, the controller 70b controls the motor 30b to stop rotating.

When the first switch 51b is in the "1" gear, the table tool 100b is in the intelligent mode, and the controller 70b directly controls the motor 30b to stop rotating.

In this example, when the table tool 100b is set to be in the intelligent mode, the table tool 100b has the function of the automatic shutdown. Specifically, when the table tool is in the intelligent mode, the controller adjusts the rotational speed of the motor to be a first rotational speed in a preset time after acquiring an unloading signal of the workpiece. In some examples, the unloading signal is related to the first signal outputted by the sensing device or a working parameter of the motor. Specifically, the working parameter of the motor includes, but is not limited to, a working current or the rotational speed of the motor. In some examples, the preset time is greater than or equal to 400 ms and less than or equal to 600 ms. In some examples, the preset time is 500 ms. In some examples, the first rotational speed is 0. In other examples, the first rotational speed is a relatively low rotational speed greater than 0. It is to be understood that when the table tool 100b is in the intelligent mode, the controller is configured to adjust the rotational speed of the motor to be the first rotational speed based on the acquired first signal or the working parameter of the motor.

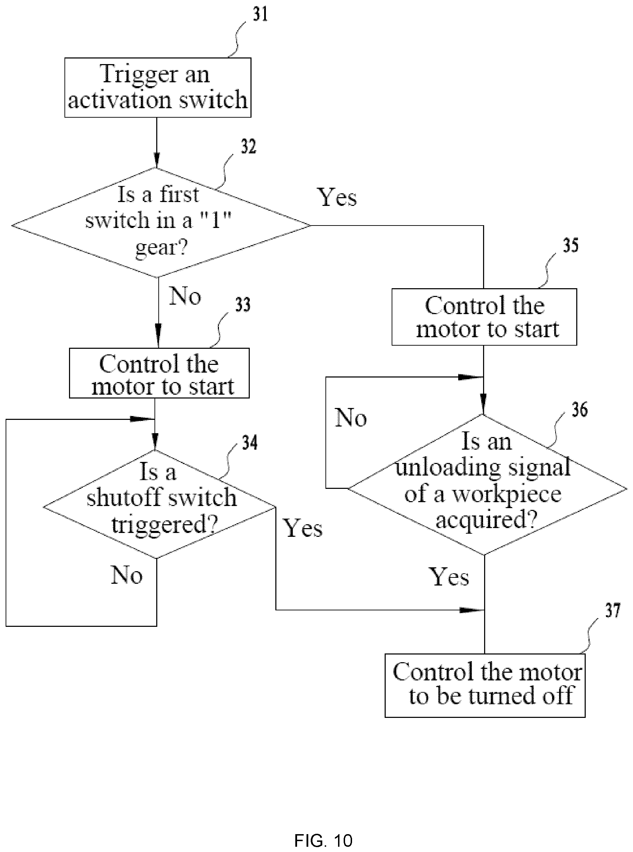

Next, in conjunction with FIG. 10, a flowchart of a control principle of the table tool 100b in different modes in this example is described.

In S31, the activation switch is triggered.

In S32, whether the first switch is currently in the "1" gear is determined. If not, step S33 is performed. If so, step S35 is performed.

In S33, the controller controls the motor to start.

In S34, whether the shutoff switch is triggered is determined. If so, step S37 is performed. If not, step S34 is performed.

In S35, the controller controls the motor to start.

In S36, whether the unloading signal of the workpiece is acquired is determined. If so, step S37 is performed. If not, step S36 is performed.

In S37, the controller controls the motor to be turned off.

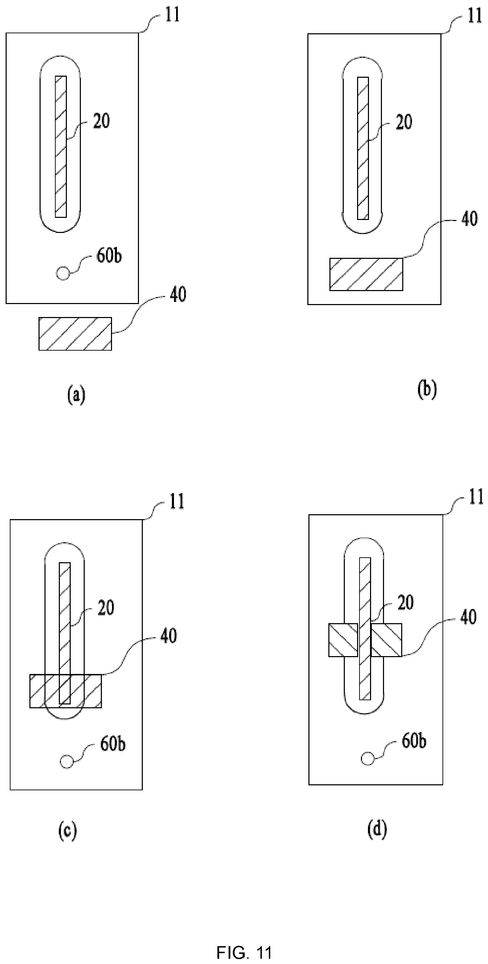

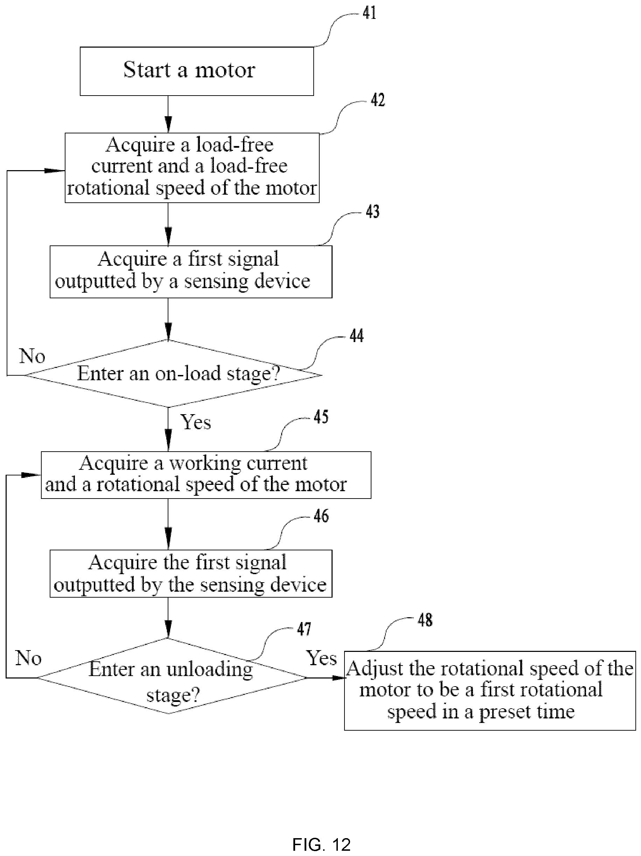

Next, in conjunction with FIGS. 11 and 12, a working process of the table tool 100b in the intelligent mode is described.

In S41, the motor starts.

When the first switch 51b is in the "1" gear, the activation switch 521b is triggered, the motor starts, the saw blade starts to rotate, and the table tool 100b enters a load-free stage. As shown in (a) of FIG. 11, the workpiece 40 is located in front of the sensing device 60b.

In S42, a load-free current and a load-free rotational speed of the motor are acquired.

When the table tool 100b is in the load-free stage, the controller 70b acquires the load-free current and the load-free rotational speed of the motor.

In S43, the first signal outputted by the sensing device is acquired.

When the table tool 100b is in the load-free stage, the first signal outputted by the sensing device is used for indicating whether the workpiece is detected. For example, when the first signal outputted by the sensing device is 0, it indicates that the workpiece is not detected. When the first signal outputted by the sensing device is 1, it indicates that the workpiece is detected.

In S44, whether the table tool 100b enters an on-load stage is determined. If so, S45 is performed. If not, S42 is performed.

As the user starts an operation, the table tool 100b enters the on-load stage shown in (b) and (c) of FIG. 11. Specifically, conditions under which the controller 70b determines that the table tool 100b enters the on-load stage are described below. (1) When the first signal outputted by the sensing device 60b is 1, the table tool 100b is configured to enter an on-load mode. (2) The controller 70b acquires the working current and the rotational speed of the motor in real time. When a difference between the working current and the load-free current is greater than or equal to a first current threshold and a difference between the rotational speed and the load-free rotational speed is greater than or equal to 500 rpm, the table tool 100b is configured to enter the on-load mode. It is to be noted that as long as condition (1) or condition (2) is satisfied, it can be considered that the table tool 100b enters the on-load stage.

In S45, the working current and the rotational speed of the motor when the table tool is in an on-load state are acquired.

In S46, the first signal outputted by the sensing device is acquired.

In S47, whether the table tool 100b enters an unloading stage is determined. If so, S48 is performed. If not, S45 is performed.

As the workpiece 40 finishes being machined, the table tool 100b enters the unloading stage shown in (d) of FIG. 11. When the controller 70b determines that the table tool 100b enters the unloading stage, that is, after the unloading signal is acquired, the controller 70b controls the motor to stop driving the saw blade to rotate.

Specifically, conditions under which the controller 70b determines that the table tool 100b enters the unloading stage are described below. (1) When the first signal outputted by the sensing device 60b indicates that the workpiece is not detected, it is determined that the table tool enters the unloading stage. (2) The controller 70b acquires the working current and the rotational speed of the motor in real time. When a difference between the working current and the load-free current is less than or equal to a second current threshold and a difference between the rotational speed and the load-free rotational speed is less than or equal to 2000 rpm, the table tool 100b is configured to enter an unloading mode. It is to be noted that when both condition (1) and condition (2) are satisfied, it is considered that the table tool 100b enters the unloading stage. It is to be understood that the unloading signal is related to the first signal outputted by the sensing device 60b or the working parameter of the motor. When the table tool enters the unloading stage, it is considered that the controller receives the unloading signal. In this example, the first current threshold and the second current threshold are set to 7 A.

In S48, the controller adjusts the rotational speed of the motor to be the first rotational speed in the preset time.

After acquiring the unloading signal, the controller controls the rotational speed of the motor to be the first rotational speed in the preset time. In this example, the preset time is set to 500 ms, and the first rotational speed is set to 0.

In some examples, the table tool 100b further includes the power supply device (not shown) electrically connected to the table tool 100b to supply power to the table tool 100b. The power supply device may be a battery pack or a mains connector. In this example, the power supply device is configured to be the battery pack, where the battery pack is detachably connected to the table tool 100b. The table tool 100b in this example further has a power indication function for indicating the remaining power of the power supply device. Specifically, the table tool 100b includes a power indicator button and a power indicator light that are operable by the user. When the user presses the power indicator button, the power indicator light indicates the remaining power of the power supply device currently and is automatically turned off after a period of time. In the present application, the power indicator button and the power indicator light may be disposed on the table or on the power supply device. Of course, the power indicator button and the power indicator light may be relatively close to each other or may be spaced apart from each other. The specific positions of the power indicator button and the power indicator light are not limited in the present application.

It is to be noted that the above are only preferred examples of the present application and the technical principles used therein. It is to be understood by those skilled in the art that the present application is not limited to the examples described herein, but also covers embodiments falling within the scope of the invention, as defined by the claims.

## Claims

1. A table tool (100), comprising:
a table (10) with a workplane (11) on which a workpiece is placed;
a saw blade (20) acting on the workpiece;
a motor (30) for driving the saw blade to rotate;
a controller (70) for controlling the motor (30);
a first switch (51) for a user to select a working mode from at least two working modes of the table tool;
a second switch operable by the user;
wherein when the table tool is in a first working mode of the at least two working modes, the controller is configured to adjust a rotational speed of the motor to be a first rotational speed based on an unloading signal of the workpiece;
wherein when the table tool is in the first working mode or a second working mode of the at least two working modes, the controller is configured to, when the second switch is in an on state, output a control signal to a driver circuit to drive the motor to rotate;
**characterized in that**
when the table tool is in the second working mode, the controller is configured to, when the second switch is in an off state, control the motor to stop.

2. The table tool of claim 1, wherein the second switch comprises an activation switch (521b) and a shutoff switch (522b) that are for the user to operate.

3. The table tool of claim 1, further comprising a sensing device (60) used for sensing a state of the workpiece and outputting a first signal to the controller, wherein the unloading signal is related to the first signal.

4. The table tool of claim 3, wherein the sensing device comprises at least a sensor disposed on a front side of the saw blade, and a distance between the sensor and the saw blade is greater than 0 and less than or equal to 20 mm.

5. The table tool of claim 4, wherein the sensor comprises a capacitive proximity switch, an inductive proximity switch, or a photoelectric switch.

6. The table tool of claim 1, wherein the unloading signal is related to a working parameter of the motor.

7. The table tool of claim 6, wherein the working parameter of the motor comprises a working current or the rotational speed of the motor.

8. The table tool of claim 1, wherein the first rotational speed is set to 0.

9. The table tool of claim 1, further comprising a power supply device detachably mounted onto the table tool and used for supplying power to the table tool.

10. The table tool of claim 1, wherein the controller is configured to adjust the rotational speed of the motor to be the first rotational speed after a preset time of acquiring the unloading signal of the workpiece.

11. The table tool of claim 10, wherein the preset time is greater than or equal to 400 ms and less than or equal to 600 ms.

12. The table tool of claim 1, wherein the at least two working modes further comprise a third working mode, the controller controls the motor to stop when the first switch is in a gear of turning off the motor, and the first switch is configured to be operated by the user to switch the table tool in the first working mode or the second working mode.

13. The table tool of claim 1, wherein the at least two working modes further comprise a third working mode, the controller does not perform corresponding processing on the unloading signal of the workpiece in the second working mode, and the first switch is configured to be operated by the user to switch the table tool in the first working mode or the second working mode.

## Patentansprüche

1. Tischwerkzeug (100) mit:
einem Tisch (10) mit einer Arbeitsfläche (11), auf der ein Werkstück platziert wird;
einem Sägeblatt (20), das auf das Werkstück wirkt;
einem Motor (30) zum Antrieb des Sägeblatts;
einem Steuergerät (70) zur Steuerung des Motors (30);
einem ersten Schalter (51), mit dem ein Benutzer einen Arbeitsmodus aus mindestens zwei Arbeitsmodi des Tischwerkzeugs auswählen kann;
einem zweiten, vom Benutzer bedienbaren Schalter;
wobei, wenn sich das Tischwerkzeug in einem ersten Arbeitsmodus der mindestens zwei Arbeitsmodi befindet, die Steuerung so konfiguriert ist, dass sie eine Drehgeschwindigkeit des Motors auf der Grundlage eines Entladesignals des Werkstücks auf eine erste Drehgeschwindigkeit einstellt;
wobei, wenn sich das Tischwerkzeug in dem ersten Arbeitsmodus oder einem zweiten Arbeitsmodus der mindestens zwei Arbeitsmodi befindet, die Steuerung so konfiguriert ist, dass sie, wenn sich der zweite Schalter in einem eingeschalteten Zustand befindet, ein Steuersignal an eine Treiberschaltung ausgibt, um den Motor zum Drehen anzutreiben;
**dadurch gekennzeichnet, dass**
wenn sich das Tischwerkzeug im zweiten Arbeitsmodus befindet, die Steuerung so konfiguriert ist, dass sie, wenn sich der zweite Schalter in einem Aus-Zustand befindet, den Motor zum Anhalten steuert.

2. Tischgerät nach Anspruch 1, wobei der zweite Schalter einen Aktivierungsschalter (521b) und einen Abschaltschalter (522b) umfasst, die vom Benutzer zu betätigen sind.

3. Tischwerkzeug nach Anspruch 1, ferner mit einer Abtastvorrichtung (60), die zum Abtasten eines Zustandes des Werkstücks und zum Ausgeben eines ersten Signals an die Steuerung verwendet wird, wobei das Entladesignal mit dem ersten Signal in Beziehung steht.

4. Tischwerkzeug nach Anspruch 3, wobei die Abtastvorrichtung mindestens einen Sensor umfasst, der an einer Vorderseite des Sägeblatts angeordnet ist, und ein Abstand zwischen dem Sensor und dem Sägeblatt größer als 0 und kleiner als oder gleich 20 mm ist.

5. Tischgerät nach Anspruch 4, wobei der Sensor einen kapazitiven Näherungsschalter, einen induktiven Näherungsschalter oder einen photoelektrischen Schalter umfasst.

6. Tischwerkzeug nach Anspruch 1, wobei das Entladesignal sich auf einen Arbeitsparameter des Motors bezieht.

7. Tischwerkzeug nach Anspruch 6, wobei der Arbeitsparameter des Motors einen Arbeitsstrom oder die Drehgeschwindigkeit des Motors umfasst.

8. Tischwerkzeug nach Anspruch 1, wobei die erste Drehgeschwindigkeit auf 0 eingestellt ist.

9. Tischwerkzeug nach Anspruch 1, ferner mit einer Stromversorgungseinrichtung, die abnehmbar am Tischwerkzeug angebracht ist und zur Stromversorgung des Tischwerkzeugs dient.

10. Tischwerkzeug nach Anspruch 1, wobei die Steuerung so konfiguriert ist, dass sie die Drehzahl des Motors so einstellt, dass sie nach einer voreingestellten Zeit des Erfassens des Entladesignals des Werkstücks die erste Drehzahl ist.

11. Tischwerkzeug nach Anspruch 10, wobei die voreingestellte Zeit größer als oder gleich 400 ms und kleiner als oder gleich 600 ms ist.

12. Tischwerkzeug nach Anspruch 1, wobei die mindestens zwei Arbeitsmodi ferner einen dritten Arbeitsmodus umfassen, die Steuerung den Motor so steuert, dass er anhält, wenn sich der erste Schalter in einem Gang zum Ausschalten des Motors befindet, und der erste Schalter so konfiguriert ist, dass er vom Benutzer betätigt werden kann, um das Tischwerkzeug in den ersten Arbeitsmodus oder den zweiten Arbeitsmodus zu schalten.

13. Tischwerkzeug nach Anspruch 1, wobei die mindestens zwei Arbeitsmodi ferner einen dritten Arbeitsmodus umfassen, die Steuerung keine entsprechende Verarbeitung des Entladesignals des Werkstücks im zweiten Arbeitsmodus durchführt und der erste Schalter so konfiguriert ist, dass er vom Benutzer betätigt werden kann, um das Tischwerkzeug in den ersten Arbeitsmodus oder den zweiten Arbeitsmodus zu schalten.

## Revendications

1. Outil de table (100), comprenant :
une table (10) avec un plan de travail (11) sur lequel une pièce à travailler est placée ;
une lame de scie (20) agissant sur la pièce à travailler ;
un moteur (30) pour entraîner la lame de scie en rotation ;
une commande (70) pour commander le moteur (30) ;
un premier interrupteur (51) pour qu'un utilisateur sélectionne un mode de travail à partir d'au moins deux modes de travail de l'outil de table ;
un second interrupteur pouvant être actionné par l'utilisateur ;
dans lequel lorsque l'outil de travail est dans un premier mode de travail des au moins deux modes de travail, la commande est configurée pour ajuster une vitesse de rotation du moteur comme étant une première vitesse de rotation en se basant sur un signal de décharge de la pièce à travailler ;
dans lequel lorsque l'outil de travail est dans le premier mode de travail ou un deuxième mode de travail des au moins deux modes de travail, la commande est configurée pour, lorsque le second interrupteur est dans un état de marche, émettre un signal de commande vers un circuit d'entraînement pour entraîner le moteur en rotation ;
**caractérisé en ce que**
lorsque l'outil de table est dans le deuxième mode de travail, la commande est configurée pour, lorsque le second interrupteur est dans un état d'arrêt, commander le moteur à s'arrêter.

2. Outil de table selon la revendication 1, dans lequel le second interrupteur comprend un interrupteur d'activation (521b) et un interrupteur de coupure (552b) pour que l'utilisateur les utilise.

3. Outil de table selon la revendication 1, comprenant en outre un dispositif de capteur (60) utilisé pour détecter un état de la pièce à travailler et émettre un premier signal vers la commande, dans lequel le signal de décharge est lié au premier signal.

4. Outil de table selon la revendication 3, dans lequel le dispositif de capteur comprend au moins un capteur disposé sur un côté avant de la lame de scie, et une distance entre le capteur et la lame de scie est supérieure à 0 et inférieure ou égale à 20 mm.

5. Outil de table selon la revendication 4, dans lequel le capteur comprend un interrupteur de proximité capacitif et un interrupteur de proximité inductif, ou un interrupteur photoélectrique.

6. Outil de table selon la revendication 1, dans lequel le signal de décharge est lié à un paramètre de travail du moteur.

7. Outil de table selon la revendication 6, dans lequel le paramètre de travail du moteur comprend un courant de travail ou la vitesse de rotation du moteur.

8. Outil de table selon la revendication 1, dans lequel la première vitesse de rotation est réglée à 0.

9. Outil de table selon la revendication 1, comprenant en outre un dispositif d'alimentation électrique monté de manière séparable sur l'outil de table et utilisé pour fournir de l'électricité à l'outil de table.

10. Outil de table selon la revendication 1, dans lequel la commande est configurée pour ajuster la vitesse de rotation du moteur comme étant la première vitesse de rotation après un temps pré-réglé d'acquisition du signal de décharge de la pièce de travail.

11. Outil de table selon la revendication 10, dans lequel le temps pré-réglé est supérieur ou égal à 400 ms et inférieur ou égal à 600 ms.

12. Outil de table selon la revendication 1, dans lequel les au moins deux modes de travail comprennent en outre un troisième mode de travail, la commande commande le moteur à s'arrêter lorsque le premier interrupteur est dans une transmission d'arrêt du moteur, et le premier interrupteur est configuré pour être actionné par l'utilisateur pour faire passer l'outil de table dans le premier mode de travail ou le second mode de travail.

13. Outil de table selon la revendication 1, dans lequel les au moins deux modes de travail comprennent en outre un troisième mode de travail, la commande n'exécute pas de traitement correspondant sur le signal de décharge de la pièce de travail dans le deuxième mode de travail, et le premier interrupteur est configuré pour être actionné par l'utilisateur pour faire passer l'outil de table dans le premier mode de travail ou le second mode de travail.
